# EUROPÄISCHE PATENTSCHRIFT

(11) **EP 3 641 986 B1**
(45) Veröffentlichungstag und Bekanntmachung des Hinweises auf die Patenterteilung: **02.12.2020**
(21) Anmeldenummer: 18733220.0
(22) Anmeldetag: 18.06.2018
(51) Int. Cl.: B25B 1/10, B25B 1/24

(54) **SPANNSYTEM MIT "DRITTE HAND"-FUNKTION**
CLAMPING SYSTEM HAVING A "THIRD-HAND" FUNCTION
SYSTÈME DE SERRAGE AYANT UNE FONCTION DITE DE TROISIÈME MAIN

(30) Priorität: 23.06.2017 DE 102017113909
(43) Veröffentlichungstag der Anmeldung: 29.04.2020
(73) Patentinhaber: Ludwig Ehrhardt GmbH, 35321 Laubach (DE)
(72) Erfinder: ROTH, Henning, 57234 Wilnsdorf (DE)
(74) Vertreter: v. Bezold & Partner Patentanwälte - PartG mbB
(86) Internationale Anmeldenummer: PCT/EP2018/066045
(87) Internationale Veröffentlichungsnummer: WO 2018/234205

(56) Entgegenhaltungen:
- EP-A1- 0 901 884
- DE-A1-102008 019 589

## Beschreibung

Die Erfindung betrifft ein Spannsystem zum Spannen von Werkstücken, insbesondere für eine spanende Bearbeitung der eingespannten Werkstücke in einem Bearbeitungszentrum.

In modernen Bearbeitungszentren zur spanenden Bearbeitung von Werkstücken werden die Werkstücke üblicherweise in einem Spannsystem festgespannt und dann im eingespannten Zustand spanend bearbeitet. Hierbei werden als Spannsystem oftmals Schraubstöcke eingesetzt, die beispielsweise eine mittige Festbacke und zwei außen liegende Spannbacken aufweisen, wobei die beiden Spannbacken von einer Spannspindel relativ zueinander verschoben werden können, um die Werkstücke zwischen den Spannbacken und der Festbacke zu spannen.

Darüber hinaus ist es aus dem Stand der Technik bekannt, derartige Schraubstöcke mit einer sogenannten "dritte Hand"-Funktion auszustatten. Normalerweise ist es nämlich erforderlich, die beiden Werkstücke während des Festspannens zu halten, da die Werkstücke ansonsten im noch nicht gespannten Zustand aus dem Schraubstock herausfallen könnten. Hierzu sind bei einer manuellen Bedienung zwei Hände erforderlich, so dass zur Bedienung der Spannspindel eine dritte Hand erforderlich wäre. Die "dritte Hand"-Funktion ermöglicht dagegen eine Bedienung mit nur zwei Händen, wobei eine Hand die Spannspindel bedient, während die andere Hand zunächst das erste Werkstück in den Schraubstock einlegt, das dann von der "dritte Hand"-Funktion gehalten wird, damit der Bediener dann das zweite Werkstück in den Schraubstock einlegen kann, woraufhin dann der eigentliche Spannvorgang durch eine Drehung der Spannspindel erfolgen kann. Ein derartiger Schraubstock ist beispielsweise aus EP 0 901 884 A1 bekannt.

Diese bekannten Schraubstöcke mit einer "dritte Hand"-Funktion haben jedoch verschiedene Nachteile, die nachfolgend kurz beschrieben werden.

Zunächst ist zu bemerken, dass das eingelegte Werkstück von der "dritte Hand"-Funktion von einer Feder gehalten wird, was die Werkstückmasse auf ca. 15-20kg begrenzt.

Darüber hinaus kann aufgrund der Feder auf der Seite der "dritte Hand"-Funktion ohne weiteres nur ein Spannhub von ca. 4mm realisiert werden. Lediglich mit einer Hubverlängerung kann der Spannhub auf 6,5mm erweitert werden. Dies bedeutet, dass ein Übergreifen des Werkstücks oder ein Eintauchen der Spannbacke in das Werkstück nicht möglich ist.

Ferner kann die "dritte Hand"-Funktion bei dem bekannten Schraubstock nur auf einer Seite verwirklicht werden. Dies bedeutet, dass das Werkstück nur auf einer Seite des Schraubstocks vorläufig gehalten werden kann, während das Werkstück auf der anderen Seite des Schraubstocks bis zur Beendigung des Spannvorgangs manuell oder maschinell gehalten werden muss.

Ein weiterer Nachteil besteht darin, dass ein Spannen von vier Werkstücken nur mit schwimmenden Backen möglich ist, was in der Regel einen Roboterbetrieb verhindert, da der Schraubstock bei einem Roboterbetrieb auch vertikal ausgerichtet wird, wobei die Backen aufgrund der vertikalen Ausrichtung nicht in ihrer Position bleiben.

Schließlich besteht ein Nachteil des bekannten Schraubstocks mit einer "dritte Hand"-Funktion darin, dass diese nicht gegen Verschmutzung gesichert ist, da beispielsweise Materialspäne eindringen können, was den Federweg beeinflussen kann. Die bekannten Schraubstöcke sind nämlich in der Regel oben offen, so dass Späne eindringen können, was im schlimmsten Fall zu einer Funktionsbeeinträchtigung führen kann.

DE 10 2008 019 589 A1 offenbart ein Spannsystem gemäß dem Oberbegriff von Anspruch 1.

Der Erfindung liegt deshalb die Aufgabe zugrunde, ein entsprechend verbessertes Spannsystem mit einer "dritte Hand"-Funktion zu schaffen.

Diese Aufgabe wird durch ein erfindungsgemäßes Spannsystem gemäß dem Hauptanspruch gelöst.

Das erfindungsgemäße Spannsystem dient zum Spannen von Werkstücken, insbesondere für eine spanende Bearbeitung der eingespannten Werkstücke in einem Bearbeitungszentrum. Derartige Bearbeitungszentren sind an sich aus dem Stand der Technik bekannt und müssen deshalb nicht näher beschrieben werden.

Das erfindungsgemäße Spannsystem weist zunächst in Übereinstimmung mit dem Stand der Technik eine Schlittenführung auf, in der zwei Schlitten in Längsrichtung der Schlittenführung verschiebbar sind, wobei die beiden Schlitten an ihrer Oberseite jeweils eine Spannbackenaufnahme aufweisen, an der Spannbacken montiert werden können, beispielsweise durch eine Verschraubung der Spannbacken auf der Spannbackenaufnahme der Schlitten.

Darüber hinaus weist das erfindungsgemäße Spannsystem in Übereinstimmung mit dem Stand der Technik eine drehbar gelagerte Spannspindel auf, die einerseits an dem ersten Schlitten und andererseits an dem zweiten Schlitten angreift, um die beiden Schlitten entsprechend der Drehstellung der Spannspindel relativ zueinander zu spannen. Die beiden Schlitten können also durch eine Drehung der Spannspindel in Längsrichtung der Schlittenführung verschoben werden.

Ferner weist das erfindungsgemäße Spannsystem in Übereinstimmung mit dem Stand der Technik eine dritte Spannbackenaufnahme auf, die zwischen den beiden äußeren Spannbackenaufnahmen ortsfest an der Schlittenführung montiert ist und eine Festbacke aufnehmen kann. Beispielsweise kann diese dritte Spannbackenaufnahme als Quernut an der Oberseite der Schlittenführung ausgebildet sein, so dass die Montage der Festbacke in der dritten Spannbackenaufnahme durch eine Nut-Feder-Verbindung erfolgt. Zusätzlich oder alternativ kann die Festbacke auch durch eine Schraubverbindung an der dritten Spannbackenaufnahme befestigt werden.

Das erfindungsgemäße Spannsystem ermöglicht also in Übereinstimmung mit dem Stand der Technik das Spannen von zwei Werkstücken beiderseits der Festbacke.

Ferner ermöglicht das erfindungsgemäße Spannsystem in Übereinstimmung mit dem Stand der Technik die sogenannte "dritte Hand"-Funktion. So benötigt ein herkömmlicher Schraubstock bei einer Realisierung als Doppelspanner ohne die "dritte Hand"-Funktion zum Einspannen von zwei Werkstücken bei einer rein manuellen Bedienung drei Hände, nämlich eine erste Hand zum Halten des ersten Werkstücks während des Spannvorgangs, eine zweite Hand zum Halten des zweiten Werkstücks während des Spannvorgangs und eine dritte Hand zum Drehen der Spannspindel. Die sogenannte "dritte Hand"-Funktion ermöglicht ein automatisches Halten eines Werkstücks während des Spannvorgangs, so dass dieses vorläufig gehaltene Werkstück nicht mehr manuell gehalten werden muss. Die "dritte Hand"-Funktion erfüllt also während des Spannvorgangs die ansonsten erforderliche Funktion einer dritten Hand zum Halten des Werkstücks.

Das erfindungsgemäße Spannsystem zeichnet sich nun durch einen Schieber aus, der in der Schlittenführung entlang der Schlittenführung verschiebbar ist. Darüber hinaus weist das erfindungsgemäße Spannsystem eine drehbar gelagerte Verstellspindel auf, die auf den Schieber wirkt und eine Verschiebung des Schiebers in Längsrichtung der Schlittenführung ermöglicht. Der Schieber wirkt hierbei mit dem ersten Schlitten des Spannsystems zusammen und definiert einen bestimmten Bewegungsspielraum des ersten Schlittens relativ zu dem Schieber, so dass der Schieber an den Grenzen des Bewegungsspielraums jeweils einen Anschlag für den ersten Schlitten bildet, um die "dritte Hand"-Funktion zu ermöglichen. In einer bestimmten Position des Schiebers ermöglicht der Schieber also einen bestimmten Bewegungsspielraum des ersten Schlittens relativ zu dem Schieber. An den Grenzen dieses Bewegungsspielraums bildet der Schieber einen Anschlag für den ersten Schlitten, so dass eine Drehung der Spannspindel dann im Rahmen der "dritte Hand"-Funktion dazu führt, dass sich der zweite Schlitten mit der daran montierten Spannbacke an das erste Werkstück anlegt und dieses vorläufig hält. Eine Verschiebung des Schiebers durch eine Drehung der Verstellspindel führt entsprechend auch zu einer Verschiebung des Bewegungsspielraums des ersten Schlittens, was im Rahmen der "dritte Hand"-Funktion eine Anpassung an verschiedene Maße der zu spannenden Werkstücke ermöglicht.

Das erfindungsgemäße Spannsystem ermöglicht deshalb auch eine einfachere Einstellung als bei herkömmlichen Spannsystemen.

In einem bevorzugten Ausführungsbeispiel der Erfindung weist das Spannsystem eine Feder (z.B. Gasdruckfeder) auf, um die Werkstücke vor dem eigentlichen Spannvorgang im Rahmen der "dritte Hand"-Funktion vorläufig zu halten. Die Feder stützt sich hierbei einerseits an der Stirnseite der Schlittenführung ab und wirkt andererseits auf den zweiten Schlitten, so dass die Feder den zweiten Schlitten zusammen mit dem ersten Schlitten von der Stirnseite der Schlittenführung weg drückt.

Diese Feder ist vorzugsweise in einer Sackbohrung angeordnet, die sich in dem zweiten Schlitten stirnseitig befindet, wobei sich die Feder an dem Boden der Sackbohrung abstützt. Auf der anderen Seite stützt sich die Feder dagegen vorzugsweise an einer Stirnplatte der Schlittenführung ab, die einstückig angeformt oder auswechselbar montiert sein kann. Die Feder drückt also die beiden Schlitten zusammen von der Stirnseite der Schlittenführung weg, was im Rahmen der "dritte Hand"-Funktion das vorläufige Halten der eingelegten Werkstücke ermöglicht.

Es wurde bereits vorstehend kurz erwähnt, dass der Schieber mit dem ersten Schlitten zusammenwirkt und den Bewegungsspielraum des ersten Schlittens relativ zu dem Schieber in beiden Richtungen begrenzt. Hierzu kann der Schieber eine Längsnut aufweisen, wobei die Länge der Längsnut den Bewegungsspielraum des ersten Schlittens definiert. An dem ersten Schlitten befindet sich hierzu ein Anschlagstift, der an dem ersten Schlitten befestigt ist und in die Längsnut des Schiebers hineinragt, so dass die Länge der Längsnut den Bewegungsspielraum des ersten Schlittens relativ zu dem Schieber begrenzt.

Darüber hinaus befindet sich an dem Schieber vorzugsweise ein Anzeigestift, der von dem Schieber nach außen absteht und von außen sichtbar ist, damit der Bediener die Position des Schiebers von außen erkennen kann. Hierzu kann sich in der Schlittenführung ein Längsschlitz befinden, durch den der Anzeigestift von innen nach außen herausragt, damit der Anzeigestift von außen sichtbar ist.

Ferner ist zu erwähnen, dass die Feder (z.B. Gasfeder) vorzugsweise einen relativ großen Spannhub aufweist, um - anders als beim Stand der Technik - auch ein Eintauchen von Bolzen in das zu spannende Werkstück oder ein Übergreifen des zu spannenden Werkstücks zu ermöglichen. Der Spannhub der Feder beträgt deshalb vorzugsweise mindestens 10mm, 20mm, 30mm, 40mm oder sogar mindestens 50mm.

Weiterhin ist zu erwähnen, dass das erfindungsgemäße Spannsystem aufgrund seiner besonderen Konstruktion im Rahmen der "dritte Hand"-Funktion auch das Halten relativ schwerer Werkstücke ermöglicht, und zwar mit einer Werkstückmasse von mindestens 1kg, 2kg, 5kg, 10kg, 20kg oder sogar 40kg.

Darüber hinaus ist zu erwähnen, dass das vorläufige Halten der Werkstücke im Rahmen der "dritte Hand"-Funktion nicht beschränkt ist auf die eine Seite des Spannsystems, wie es beim Stand der Technik der Fall ist. Vielmehr können beide Werkstücke bei einem Spannvorgang vorläufig gehalten werden, so dass die beiden Werkstücke beim Festspannen überhaupt nicht mehr manuell gehalten werden müssen. Das erfindungsgemäße Spannsystem stellt also vorzugsweise die Funktion von zwei Händen zum Halten der beiden Werkstücke zur Verfügung.

Ein weiterer Vorteil des erfindungsgemäßen Spannsystems besteht darin, dass die Feder und der Schieber in der Schlittenführung abgedeckt montiert sind, um die Verschmutzungsanfälligkeit zu verringern. Die abgedeckte Montage von Feder und Schieber verhindert also bei einer spanenden Bearbeitung der Werkstücke, dass Materialspäne in die Schlittenführung eindringen.

Ferner ist zu erwähnen, dass die Erfindung zunächst Schutz beansprucht für ein einzelnes Spannsystem zum Spannen von zwei Werkstücken.

Darüber hinaus beansprucht die Erfindung jedoch auch Schutz für ein Doppelspannsystem mit zwei solchen Spannsystemen, die in einer gemeinsamen Schlittenführung in Längsrichtung hintereinander angeordnet sind, so dass vier Werkstücke gespannt werden können.

Jedes der beiden Spannsysteme verfügt hierbei vorzugsweise über eine eigene Spannspindel und eine eigene Verstellspindel, so dass insgesamt zwei Spannspindeln und zwei Verstellspindeln vorgesehen sind. Sämtliche Spannspindeln und sämtliche Verstellspindeln sind vorzugsweise alle an derselben Stirnseite des Doppelspannsystems zugänglich.

Darüber hinaus beansprucht die Erfindung auch Schutz für ein Turmspannsystem, wobei derartige Turmspannsysteme an sich aus dem Stand der Technik bekannt sind und deshalb nicht näher beschrieben werden müssen. Hierbei ist mindestens ein erfindungsgemäßes Spannsystem oder ein Doppelspannsystem in einen vertikalen Montageturm seitlich integriert. In einem bevorzugten Ausführungsbeispiel sind hierbei an vier Seitenflächen des Montageturms insgesamt vier Spannsysteme oder Doppelspannsysteme integriert. Dabei sind alle Montagevarianten möglich, wie beispielsweise Rücken-an-Rücken, als Dreieck, als 4-fach-Würfel, 6-fach-Würfel, etc..

Schließlich beansprucht die Erfindung auch Schutz für ein komplettes Bearbeitungszentrum mit einem erfindungsgemäßen Spannsystem.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine Perspektivansicht eines erfindungsgemäßen Turmspannsystems,
- Figur 2: eine Perspektivansicht eines erfindungsgemäßen Doppelspannsystems, das seitlich an dem Turmspannsystem gemäß Figur 1 integriert ist,
- Figur 3: eine andere Perspektivansicht des Doppelspannsystems aus Figur 2,
- Figur 4: eine Perspektivansicht des Doppelspannsystems aus den Figuren 2 und 3 mit montierten Fest- bzw. Spannbacken,
- Figur 5: die Perspektivansicht gemäß Figur 4 mit zusätzlich eingezeichneten Werkstücken,
- Figur 6: eine Längsschnittansicht des Doppelspannsystems aus den Figuren 2-5,
- Figur 7: eine Stirnansicht des Doppelspannsystems aus den Figuren 2-6,
- Figur 8: eine Schnittansicht entlang der Schnittlinie A-A in Figur 6,
- Figur 9: ein Flussdiagramm zur Verdeutlichung der Einstellung der "dritte Hand"-Funktion, sowie
- Figur 10: ein Flussdiagramm zur Erläuterung des eigentlichen Spannvorgangs einschließlich der "dritte Hand"-Funktion.

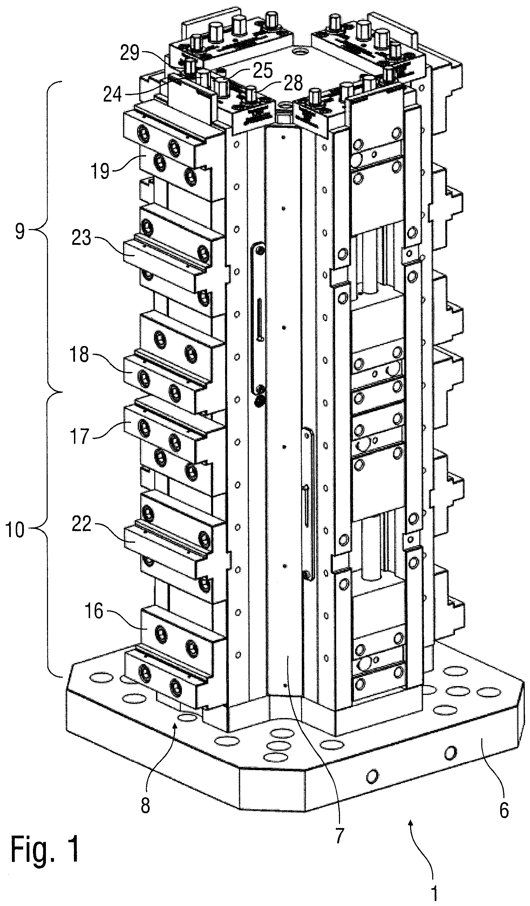

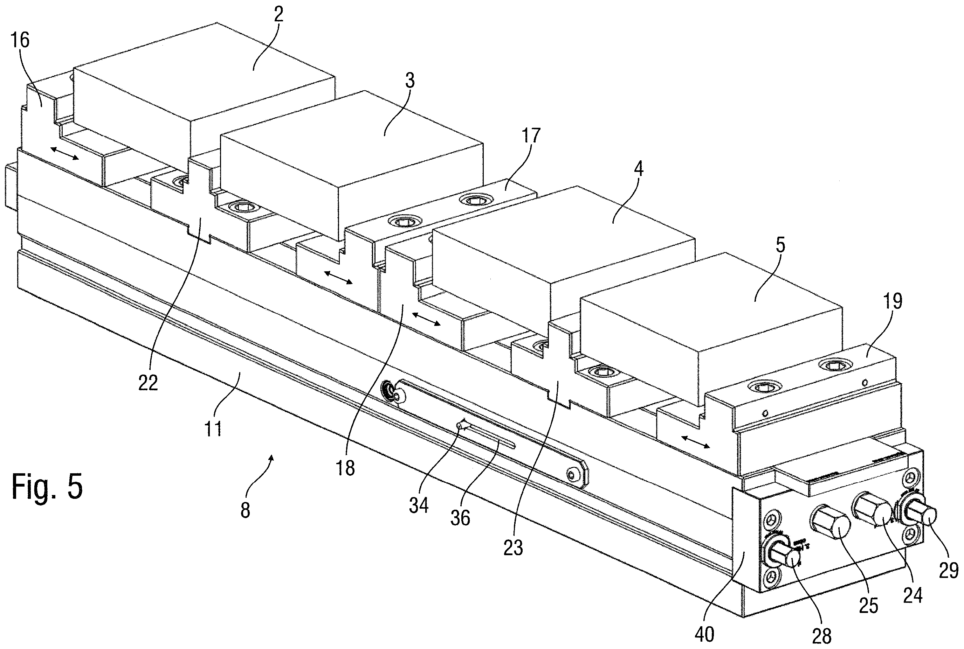

Figur 1 zeigt ein erfindungsgemäßes Turmspannsystem 1, das in einem Bearbeitungszentrum zur spanenden Bearbeitung von Werkstücken 2, 3, 4, 5 (vgl. Fig. 5) eingesetzt werden kann, um die Werkstücke 2-5 während der spanenden Bearbeitung festzuspannen.

Das Turmspannsystem 1 ist teilweise herkömmlich aufgebaut und weist zunächst eine Bodenplatte 6 auf, um das Turmspannsystem 1 beispielsweise durch eine Schraubverbindung fixieren zu können.

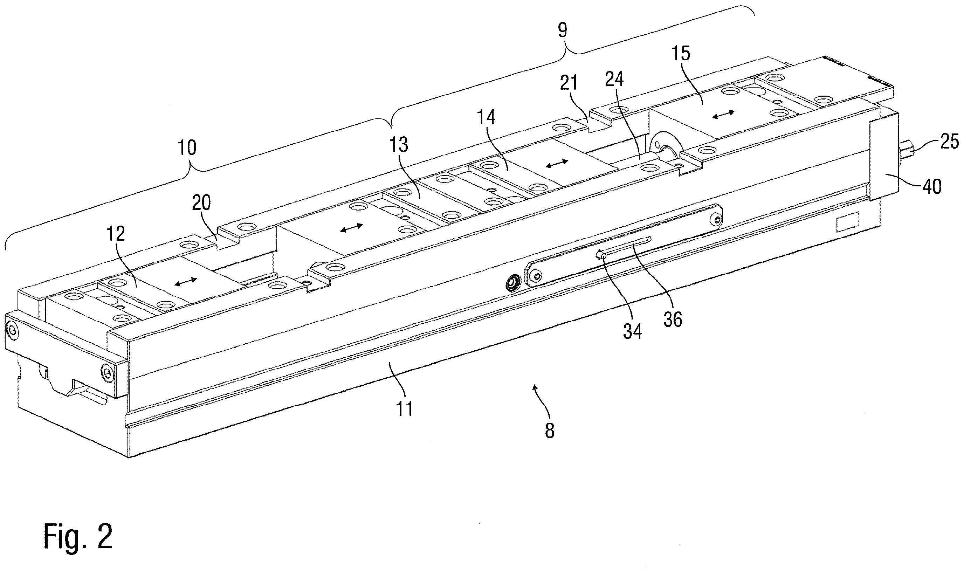

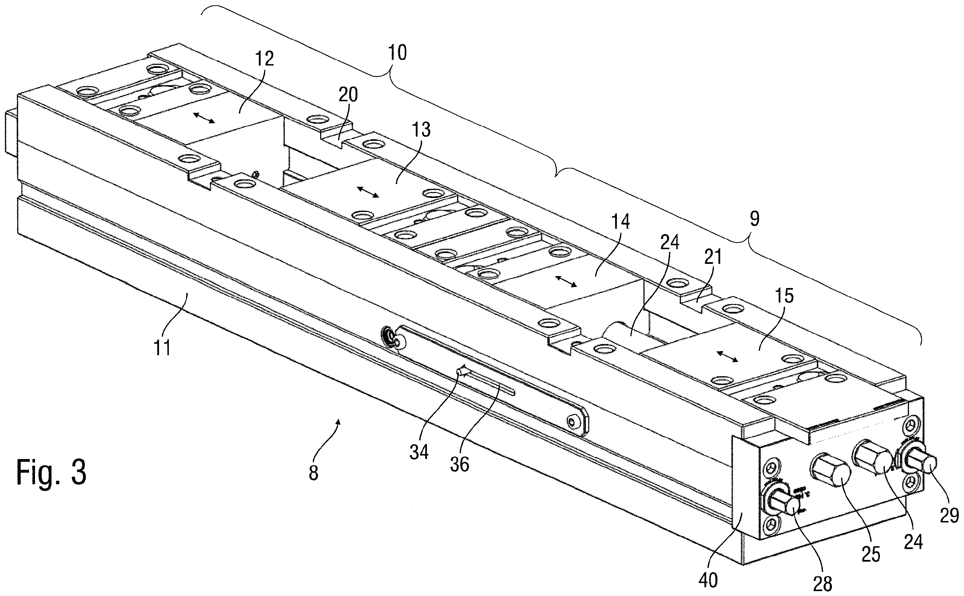

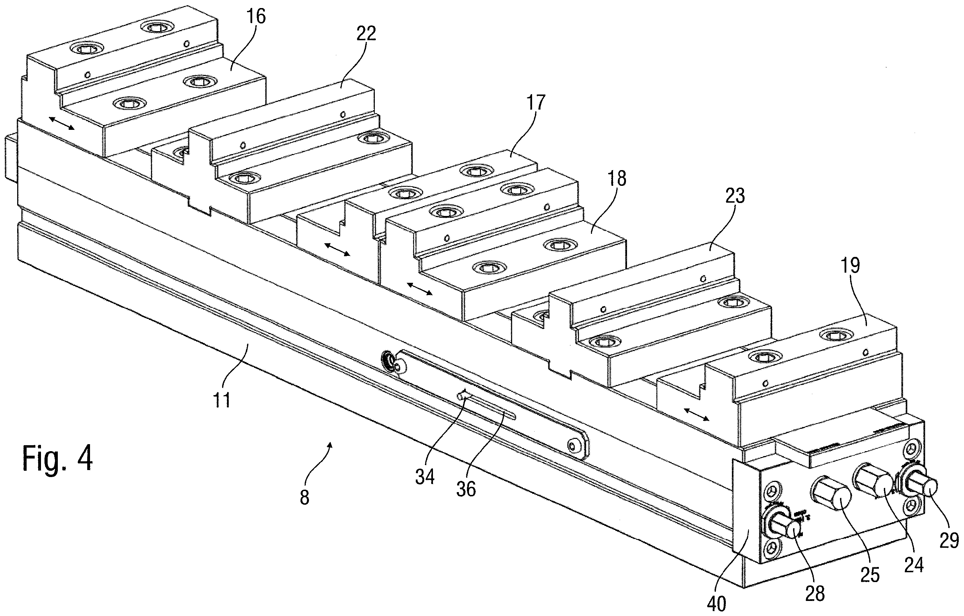

Darüber hinaus weist das Turmspannsystem 1 einen vertikal ausgerichteten Montageturm 7 auf. Der Montageturm 7 hat einen im Wesentlichen quadratischen Querschnitt, wobei in die Seitenflächen des Montageturms 7 jeweils ein Doppelspannsystem 8 integriert ist. Das Doppelspannsystem 8 ist in den Figuren 2-8 dargestellt und wird nachfolgend detailliert beschrieben. Zu dem Turmspannsystem 1 ist noch zu erwähnen, dass die Doppelspannsysteme 8 an den Seitenflächen des Montageturms 7 baugleich sind und deshalb nicht separat beschrieben werden müssen.

Das Doppelspannsystem 8 besteht im Wesentlichen aus zwei Einzelspannsystemen 9, 10, wobei das Einzelspannsystem 9 zum Spannen der Werkstücke 4, 5 (vgl. Fig. 5) dient, während das andere Einzelspannsystem 10 zum Spannen der Werkstücke 2, 3 dient.

Die beiden Einzelspannsysteme 9, 10 sind hierbei in einer gemeinsamen Schlittenführung 11 angeordnet.

In der Schlittenführung 11 sind vier Schlitten 12-15 in Richtung der Doppelpfeile verschiebbar und zwar jeweils paarweise die beiden Schlitten 12, 13 und die beiden Schlitten 14, 15.

An der Oberseite weisen die verschiebbaren Schlitten 12-15 jeweils eine Spannbackenaufnahme auf, wobei auf den Spannbackaufnahmen jeweils eine Spannbacke 16-19 festgeschraubt werden kann.

Darüber hinaus weist die Schlittenführung 10 an ihrer Oberseite zwei ortsfeste Spannbackenaufnahmen 20, 21 auf, in denen jeweils eine Festbacke 22 bzw. 23 ortsfest montiert werden kann. Die ortsfesten Spannbackenaufnahmen 20, 21 umfassen jeweils eine Quernut in der Schlittenführung 11 sowie Aufnahmebohrungen für eine Verschraubung der Festbacken 22, 23.

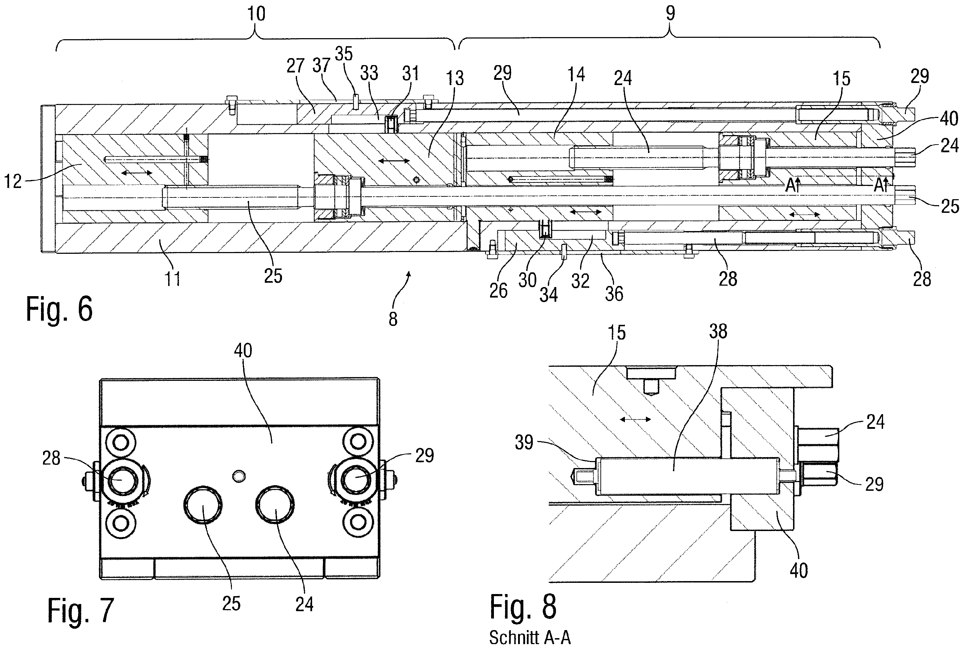

Darüber hinaus weist das Doppelspannsystem zwei Spannspindeln 24, 25 auf, um die beiden Schlitten 12, 13 bzw. die beiden Schlitten 14, 15 in Richtung der Doppelpfeile zu verschieben. Die Spannspindel 24 dient also zur Verschiebung der beiden Schlitten 14, 15 mit den daran montierten Spannbacken 18, 19. Die andere Spannspindel 25 dient dagegen zur Verschiebung der Schlitten 12, 13 mit den daran montierten Spannbacken 16, 17. Hierzu stehen die beiden Spannspindeln 24, 25 jeweils in einem Gewindeeingriff mit der zugehörigen Spannbacke 12, 14, wie insbesondere aus der Schnittzeichnung in Figur 6 ersichtlich ist und aus dem Stand der Technik ebenfalls bekannt ist. Bei einem Drehen der Spannspindeln 24, 25 werden die Spannbacken 16, 17 bzw. 18, 19 also jeweils paarweise auf die zugehörige Festbacke 22 bzw. 23 hinzu bewegt oder davon weg gezogen. Das Werkstück 2 (vgl. Fig. 5) kann also zwischen der Spannbacke 16 und der Festbacke 22 festgespannt werden, während das Werkstück 3 zwischen der Festbacke 22 und der Spannbacke 17 festgespannt werden kann. Das Werkstück 4 kann dagegen zwischen der Spannbacke 18 und der Festbacke 23 festgespannt werden. Schließlich kann das Werkstück 5 zwischen der Festbacke 23 und der Spannbacke 19 festgespannt werden.

Darüber hinaus ermöglicht das Doppelspannsystem 8 auch eine sogenannte "dritte Hand"-Funktion. Dies bedeutet, dass das Doppelspannsystem 8 die Werkstücke 2-5 nach dem Einlegen in das Doppelspannsystem 8 und vor dem eigentlichen Spannvorgang halten kann, so dass die Werkstücke 2-5 nicht manuell oder durch einen Roboter gehalten werden müssen bis der Spannvorgang beendet ist. Das Doppelspannsystem 8 stellt also die Funktion einer zusätzlichen Hand bereit, die ansonsten bei einer manuellen Bedienung ohne die "dritte Hand"-Funktion erforderlich wäre.

Zur technischen Realisierung dieser "dritte Hand"-Funktion weist das Doppelspannsystem 8 für die beiden Einzelspannsysteme 9, 10 jeweils einen Schieber 26, 27 auf, wobei die beiden Schieber 26, 27 in Figur 6 dargestellt sind. Die beiden Schieber 26, 27 können von jeweils einer Verstellspindel 28, 29 in Längsrichtung der Schlittenführung 11 verschoben werden. Die Verstellspindel 28 wirkt hierbei auf den Schieber 26, während die Verstellspindel 29 auf den Schieber 27 wirkt.

Die beiden Schieber 26, 27 begrenzen den Bewegungsspielraum der Schlitten 13 bzw. 14 in Längsrichtung der Schlittenführung. Hierzu ist in den Schlitten 13, 14 jeweils ein Anschlagstift 30, 31 angebracht, der in eine entsprechende Längsnut 32, 33 an der Innenseite des Schiebers 26 bzw. 27 hineinragt. Die Längsnut 32 bzw. 33 in dem Schieber 26 bzw. 27 bildet also zwei Anschläge für den Anschlagstift 30, 31 und begrenzt dadurch den Bewegungsspielraum des Schlittens 13 bzw. 14 in Längsrichtung der Schlittenführung 11.

Der Bewegungsspielraum der Schlitten 13, 14 kann also in Längsrichtung der Schlittenführung 11 verschoben werden, indem die Verstellspindeln 28, 29 entsprechend gedreht werden.

Weiterhin ist zu erwähnen, dass die Schieber 26, 27 außen jeweils einen Anzeigestift 34, 35 tragen, der durch einen Längsschlitz 36, 37 aus der Schlittenführung 11 nach außen ragt. Der Bediener kann also anhand der Stellung des Anzeigestifts 34 bzw. 35 die Position des jeweiligen Schiebers 26 bzw. 27 erkennen. Die Anzeigestifte 34 bzw. 35 müssen sich beim Einstellen der "dritte Hand"-Funktion in der markierten Position befinden. Erst beim Einstellen des Einlegespiels durch die Verstellspindel 28 bzw. 29 bewegt sich der Anzeigestift 34 bzw. 35 dann aus der Markierung.

Darüber hinaus dient zur technischen Realisierung der "dritte Hand"-Funktion eine Gasdruckfeder 38 (vgl. Fig. 8). An einem Ende stützt sich die Gasdruckfeder 38 am Boden einer Sackbohrung 39 in dem Schlitten 15 ab. Am anderen Ende stützt sich die Gasdruckfeder 38 dagegen an einer Stirnplatte 40 ab, die an der Stirnseite der Schlittenführung 11 festgeschraubt ist. Die Gasdruckfeder 38 drückt also den Schlitten 15 zusammen mit dem Schlitten 14 von der Stirnplatte 40 weg.

Eine weitere entsprechende Gasdruckfeder dient in gleicher Weise dazu, die Schlitten 12, 13 des anderen Einzelspannsystems 10 vorzuspannen, wobei diese weitere Gasdruckfeder in den Zeichnungen nicht erkennbar ist.

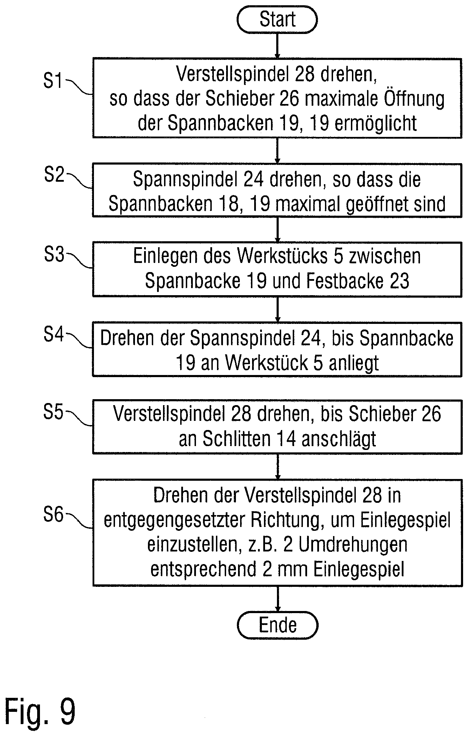

Im Folgenden wird nun zunächst unter Bezugnahme auf Figur 9 die Einstellung "dritte Hand"-Funktion beschrieben und zwar zunächst nur für das Einzelspannsystem 9. Die Einstellung der "dritte Hand"-Funktion für das andere Einzelspannsystem 10 erfolgt jedoch in gleicher Weise.

In einem ersten Schritt S1 wird zunächst die Verstellspindel 28 des Einzelspannsystems 9 so gedreht, dass der Schieber 26 eine maximale Öffnung der Schlitten 14, 15 und der daran montierten Spannbacken 18, 19 ermöglicht. Der Schieber 26 wird also in der Zeichnung gemäß Figur 7 maximal nach links geschoben.

In einem zweiten Schritt S2 wird dann die Spannspindel 24 des Einzelspannsystems 9 so gedreht, dass die Schlitten 14, 15 mit den daran montierten Spannbacken 18, 19 maximal geöffnet sind.

In einem anschließenden Schritt S3 wird dann das Werkstück 5 (vgl. Fig. 5) zwischen die Festbacke 23 und die Spannbacke 19 eingelegt.

Im nächsten Schritt S4 wird dann die Spannspindel 24 so gedreht, dass sich die verschiebbare Spannbacke 19 an das Werkstück 5 anlegt.

Im nächsten Schritt S5 wird dann die zugehörige Verstellspindel 28 so gedreht, bis sich der Schieber 26 an den Schlitten 14 der Spannbacke 18 anlegt.

Im letzten Schritt S6 wird die Verstellspindel 28 dann in entgegengesetzter Richtung gedreht, um das Einlegespiel einzustellen. Beispielsweise können zwei Umdrehungen der Verstellspindel 28 einem Einlegespiel von 2mm entsprechen.

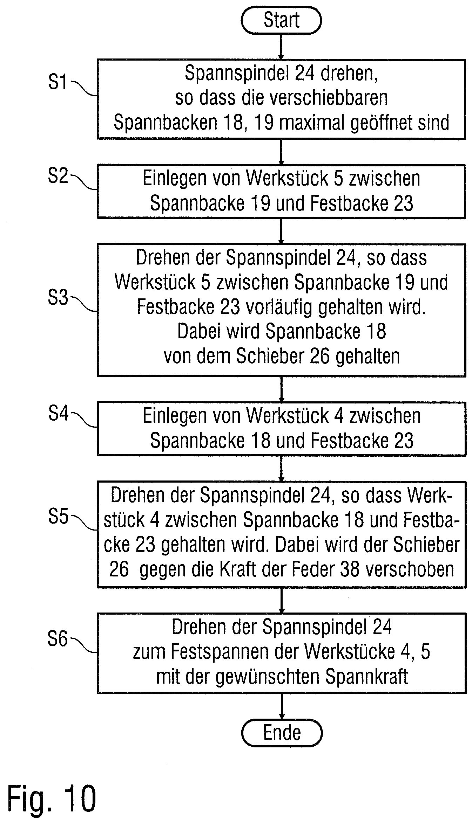

Im Folgenden wird nun unter Bezugnahme auf Figur 10 der eigentliche Betrieb des Einzelspannsystems 9 beschrieben, wobei das Einzelspannsystem 10 in gleicher Weise funktioniert.

In einem ersten Schritt S1 wird zunächst die Spannspindel 24 so gedreht, dass die Spannbacken 18, 19 maximal geöffnet sind.

Im nächsten Schritt S2 wird dann das Werkstück 5 zwischen die Festbacke 23 und die Spannbacke 19 eingelegt.

Im nächsten Schritt S3 wird dann die Spannspindel 24 so gedreht, dass das Werkstück 5 zwischen der Festbacke 23 und der Spannbacke 19 vorläufig gehalten wird. Hierbei erzeugt die Gasdruckfeder 38 die zum Halten erforderliche Haltekraft.

Im nächsten Schritt S4 wird dann das Werkstück 4 zwischen die Spannbacke 18 und die Festbacke 23 eingelegt.

Im nächsten Schritt S5 wird dann die Spannspindel 24 so gedreht, dass sich die Spannbacke 18 an das Werkstück 4 anlegt. Hierbei ist zu beachten, dass die Spannspindel 24 bei diesem Spannvorgang die Haltekraft der Gasdruckfeder 38 überwinden muss.

Im letzten Schritt S6 wird die Spannspindel 24 dann so weit gedreht, bis die gewünschte Spannkraft zum Festspannen der Werkstücke 4, 5 erreicht ist.

### Bezugszeichenliste:

- 1: Turmspannsystem
- 2-5: Werkstücke
- 6: Bodenplatte des Turmspannsystems
- 7: Montageturm des Turmspannsystems
- 8: Doppelspannsystem
- 9, 10: Einzelspannsysteme
- 11: Schlittenführung
- 12-15: Schlitten
- 16-19: Spannbacke
- 20, 21: Ortsfeste Spannbackenaufnahme
- 22, 23: Festbacke
- 24, 25: Spannspindeln
- 26, 27: Schieber
- 28, 29: Verstellspindeln
- 30, 31: Anschlagstift, der in die Längsnut des Schiebers eingreift
- 32, 33: Längsnut in dem Schieber
- 34, 35: Anzeigestift an dem Schieber
- 36, 37: Längsschlitz
- 38: Gasdruckfeder
- 39: Sackbohrung für Gasdruckfeder
- 40: Stirnplatte der Schlittenführung

## Patentansprüche

1. Spannsystem (9, 10) zum Spannen von Werkstücken (2-5), insbesondere für eine spanende Bearbeitung der eingespannten Werkstücke in einem Bearbeitungszentrum, mit
a) einer Schlittenführung (11),
b) einem ersten Schlitten (13, 14), der
b1) von der Schlittenführung (11) geführt wird,
b2) entlang der Schlittenführung (11) verschiebbar ist, und
b3) der eine erste Spannbackenaufnahme aufweist, an der eine erste Spannbacke (17, 18) angebracht werden kann,
c) einem zweiten Schlitten (12, 15), der
c1) von der Schlittenführung (11) geführt wird,
c2) entlang der Schlittenführung (11) verschiebbar ist, und
c3) der eine zweite Spannbackenaufnahme aufweist, an der eine zweite Spannbacke (16, 19) angebracht werden kann,
d) einer drehbar gelagerten Spannspindel (24, 25), die einerseits an dem ersten Schlitten (13, 14) und andererseits an dem zweiten Schlitten (12, 15) angreift, um die beiden Schlitten (12, 13 bzw. 14, 15) entsprechend der Drehstellung der Spannspindel (24, 25) relativ zueinander zu spannen, und
e) einer dritten Spannbackenaufnahme (20, 21), die
e1) ortsfest an der Schlittenführung (11) montiert ist,
e2) wobei an der dritten Spannbackenaufnahme (20, 21) eine Festbacke (22, 23) montiert werden kann,
f) wobei das Spannsystem (9, 10) eine "Dritte-Hand"-Funktion ermöglicht, und mit
g) einem Schieber (26, 27), wobei der Schieber (26, 27)
g1) entlang der Schlittenführung (11) verschiebbar ist, und
g2) mit dem ersten Schlitten (13, 14) zusammenwirkt,
**dadurch gekennzeichnet,**
h) **dass** die dritte Spannbackenaufnahme (20, 21) zwischen der ersten Spannbackenaufnahme und der zweiten Spannbackenaufnahme angeordnet ist,
i) **dass** ein erstes Werkstück (3, 4) zwischen der ersten Spannbacke (17, 18) und der mittleren Festbacke (22, 23) gespannt werden kann, während ein zweites Werkstück (2, 5) zwischen der zweiten Spannbacke (16, 19) und der mittleren Festbacke gespannt werden kann,
j) **dass** der Schieber (26, 27) mittels einer drehbar gelagerten Verstellspindel (28, 29) verschiebbar ist, und
k) **dass** der Schieber (26, 27) einen bestimmten Bewegungsspielraum des ersten Schlittens (13, 14) relativ zu dem Schieber (26, 27) definiert, so dass der Schieber (26, 27) an den Grenzen des Bewegungsspielraums jeweils einen Anschlag für den ersten Schlitten (13, 14) bildet, um die "Dritte-Hand"-Funktion zu ermöglichen.

2. Spannsystem (9, 10) nach Anspruch 1, **dadurch gekennzeichnet,**
a) **dass** das Spannsystem (9, 10) eine Feder (38) aufweist, insbesondere eine Gasdruckfeder (38), um die Werkstücke (2-5) vor dem eigentlichen Spannvorgang vorläufig zu halten,
b) **dass** sich die Feder (38) einerseits an der Stirnseite der Schlittenführung (11) abstützt, und
c) **dass** die Feder (38) andererseits auf den zweiten Schlitten (12, 15) wirkt und den zweiten Schlitten (12, 15) zusammen mit dem ersten Schlitten (13, 14) von der Stirnseite der Schlittenführung (11) wegdrückt.

3. Spannsystem (9, 10) nach Anspruch 2, **dadurch gekennzeichnet,**
a) **dass** der zweite Schlitten (12, 15) stirnseitig eine Sackbohrung (39) aufweist, die in Längsrichtung der Schlittenführung (11) verläuft,
b) **dass** die Schlittenführung (11) stirnseitig eine ortsfest montierte Stirnplatte (40) aufweist, und
c) **dass** sich die Feder (38) einerseits am Boden der Sackbohrung (39) und andererseits an der Stirnplatte (40) abstützt.

4. Spannsystem (9, 10) nach einem der vorhergehenden Ansprüche, **dadurch gekennzeichnet, dass** der Schieber (26, 27) durch folgende konstruktive Merkmale mit dem ersten Schlitten (13, 14) zusammenwirkt und dadurch den Bewegungsspielraum des ersten Schlittens (13, 14) relativ zu dem Schieber (26, 27) in beiden Richtungen begrenzt:
a) eine Längsnut (32, 33) in dem Schieber (26, 27), und
b) einen Anschlagstift (30, 31), der an dem ersten Schlitten (13, 14) befestigt und in die Längsnut des Schiebers (26, 27) hineinragt, so dass die Länge der Längsnut (32, 33) den Bewegungsspielraum des ersten Schlittens (13, 14) relativ zu dem Schieber (26, 27) begrenzt.

5. Spannsystem (9, 10) nach Anspruch 4, **dadurch gekennzeichnet,**
a) **dass** von dem Schieber (26, 27) ein Anzeigestift (34, 35) nach außen absteht,
b) **dass** die Schlittenführung (11) einen Längsschlitz (36, 37) aufweist, und
c) **dass** der Anzeigestift (34, 35) des Schiebers (26, 27) durch den Längsschlitz (36, 37) der Schlittenführung (11) nach außen herausragt, so dass der Anzeigestift (34, 35) und damit auch die Position des Schiebers (26, 27) von außen sichtbar ist.

6. Spannsystem (9, 10) nach einem der vorhergehenden Ansprüche, **dadurch gekennzeichnet,**
a) **dass** die Feder (38) einen Spannhub von mindestens 10mm, 20mm, 30mm, 40mm oder mindestens 50mm aufweist, um vorzugsweise auch ein Eintauchen von Bolzen in das zu spannende Werkstück (2-5) oder ein Übergreifen des zu spannenden Werkstücks (2-5) zu ermöglichen, und/oder
b) **dass** die vorläufige Spannung der Werkstücke (2-5) funktioniert bei einer Werkstückmasse von mindestens 1kg, 2kg, 5kg, 10kg, 20kg oder 40kg.

7. Spannsystem (9, 10) nach einem der vorhergehenden Ansprüche, **dadurch gekennzeichnet, dass** die Feder (38) und der Schieber (26, 27) in der Schlittenführung (11) abgedeckt montiert sind, um die Verschmutzungsanfälligkeit zu verringern.

8. Doppelspannsystem (8) mit zwei Spannsystemen (9, 10), die in einer gemeinsamen Schlittenführung (11) in Längsrichtung hintereinander angeordnet sind, so dass vier Werkstücke (2-5) gespannt werden können, **dadurch gekennzeichnet, dass** die beiden Spannsysteme (9, 10) jeweils nach einem der vorhergehenden Ansprüche ausgebildet sind.

9. Doppelspannsystem (8) nach Anspruch 8, **dadurch gekennzeichnet, dass** die Spannspindeln (24, 25) und die Verstellspindeln (28, 29) der beiden Spannsysteme (9, 10) alle an einer Stirnseite des Doppelspannsystems (8) zugänglich sind.

10. Turmspannsystem (1) mit
a) einem senkrechten Montageturm (7),
b) mindestens einem Spannsystem (9, 10) nach einem der vorhergehenden Ansprüche, wobei das Spannsystem (9, 10) seitlich in den Montageturm (7) integriert ist und mit seiner Längsrichtung senkrecht entlang dem Montageturm (7) verläuft.

11. Turmspannsystem (1) nach Anspruch 10, **dadurch gekennzeichnet, dass** mehrere Spannsysteme (9, 10) nach einem der Ansprüche 1 bis 8 oder mehrere Doppelspannsysteme (8) nach Anspruch 9 jeweils seitlich in den Montageturm (7) integriert sind.

12. Bearbeitungszentrum zur spanenden Bearbeitung von Werkstücken (2-5), mit einem Spannsystem (9, 10) nach einem der Ansprüche 1 bis 8, einem Doppelspannsysteme (8) nach Anspruch 9 oder einem Turmspannsystem (1) nach einem der Ansprüche 10 oder 11.

## Claims

1. Clamping system (9, 10) for clamping workpieces (2-5), in particular for machining the clamped workpieces in a machining centre, with
a) a carriage guide (11),
b) a first carriage (13, 14) which
b1) is guided by the carriage guide (11),
b2) is displaceable along the carriage guide (11), and
b3) which has a first clamping jaw holder to which a first clamping jaw (17, 18) can be attached,
c) a second carriage (12, 15) which
c1) is guided by the carriage guide (11),
c2) is displaceable along the carriage guide (11), and
c3) which has a second clamping jaw holder to which a second clamping jaw (16, 19) can be attached,
d) a rotatably supported clamping spindle (24, 25) which, on the one hand, engages on the first carriage (13, 14) and, on the other hand, on the second carriage (12, 15) in order to clamp the two carriages (12, 13 or 14, 15) with respect to each other according to the rotational position of the clamping spindle (24, 25), and
e) a third clamping jaw holder (20, 21) which
e1) is fixedly mounted on the carriage guide (11),
e2) wherein a fixed jaw (22, 23) can be mounted on the third clamping jaw holder (20, 21),
f) wherein the clamping system (9, 10) enables a "third hand" function, and with
g) a slide (26, 27), wherein the slide (26, 27)
g1) is displaceable along the carriage guide (11), and
g2) cooperates with the first carriage (13, 14),
**characterised in that**
h) the third clamping jaw holder (20, 21) is arranged between the first clamping jaw holder and the second clamping jaw holder,
i) **in that** a first workpiece (3, 4) can be clamped between the first clamping jaw (17, 18) and the middle fixed jaw (22, 23), while a second workpiece (2, 5) can be clamped between the second clamping jaw (16, 19) and the middle fixed jaw,
j) **in that** the slide (26, 27) is displaceable by means of a rotatably supported adjusting spindle (28, 29), and
k) **in that** the slide (26, 27) defines a certain range of movement of the first carriage (13, 14) with respect to the slide (26, 27) such that in each case the slide (26, 27) forms a limit stop for the first carriage (13, 14) at the limits of the range of movement in order to enable the "third hand" function.

2. Clamping system (9, 10) according to claim 1, **characterised in that**
a) the clamping system (9, 10) has a spring (38), in particular a gas compression spring (38), to hold the workpieces (2-5) temporarily before the actual clamping process,
b) **in that** the spring (38) is supported on the front face of the carriage guide (11) on the one hand, and
c) **in that** the spring (38) acts on the second carriage (12, 15) on the other hand and pushes the second carriage (12, 15) together with the first carriage (13, 14) away from the front face of the carriage guide (11).

3. Clamping system (9, 10) according to claim 2, **characterised in that**
a) the second carriage (12, 15) has a blind hole (39) on the front face which extends in the longitudinal direction of the carriage guide (11),
b) **in that** the carriage guide (11) has a fixedly mounted front plate (40) on the front face, and
c) **in that** the spring (38) is supported on the base of the blind hole (39) on the one hand and on the front plate (40) on the other hand.

4. Clamping system (9, 10) according to one of the preceding claims, **characterised in that** the slide (26, 27) cooperates with the first carriage (13, 14) due to the following design features and as a result limits the range of movement of the first carriage (13, 14) with respect to the slide (26, 27) in both directions:
a) a longitudinal slot (32, 33) in the slide (26, 27), and
b) a stop pin (30, 31) which is attached to the first carriage (13, 14) and protrudes into the longitudinal slot of the slide (26, 27) such that the length of the longitudinal slot (32, 33) limits the range of movement of the first carriage (13, 14) with respect to the slide (26, 27).

5. Clamping system (9, 10) according to claim 4, **characterised in that**
a) an indicator pin (34, 35) projects outwards from the slide (26, 27),
b) **in that** the carriage guide (11) has a longitudinal slot (36, 37), and
c) **in that** the indicator pin (34, 35) of the slide (26, 27) protrudes outwards through the longitudinal slot (36, 37) of the carriage guide (11) such that the indicator pin (34, 35) and thus also the position of the slide (26, 27) is visible from the outside.

6. Clamping system (9, 10) according to one of the preceding claims, **characterised in that**
a) the spring (38) has a clamping stroke of at least 10 mm, 20 mm, 30 mm, 40 mm or at least 50 mm, preferably in order to also allow bolts to insert into the workpiece (2-5) to be clamped or to allow overlapping of the workpiece (2-5) to be clamped, and/or
b) **in that** the temporary clamping of the workpieces (2-5) functions with a workpiece mass of at least 1kg, 2kg, 5kg, 10kg, 20kg or 40kg.

7. Clamping system (9, 10) according to one of the preceding claims, **characterised in that** the spring (38) and the slide (26, 27) are mounted in the carriage guide (11) so as to be covered, in order to reduce the susceptibility to dirt.

8. Double clamping system (8) with two clamping systems (9, 10) which are arranged one behind the other in the longitudinal direction in a joint carriage guide (11) such that four workpieces (2-5) can be clamped, **characterised in that** the two clamping systems (9, 10) are each configured according to one of the preceding claims.

9. Double clamping system (8) according to claim 8, **characterised in that** the clamping spindles (24, 25) and the adjusting spindles (28, 29) of the two clamping systems (9, 10) are all accessible on one front face of the double clamping system (8).

10. Tower clamping system (1) with
a) a vertical mounting tower (7),
b) at least one clamping system (9, 10) according to one of the preceding claims, wherein the clamping system (9, 10) is integrated laterally into the mounting tower (7) and extends with its longitudinal direction vertically along the mounting tower (7).

11. Tower clamping system (1) according to claim 10, **characterised in that** a plurality of clamping systems (9, 10) according to one of claims 1 to 8 or a plurality of double clamping systems (8) according to claim 9 are each integrated laterally into the mounting tower (7).

12. Machining centre for machining of workpieces (2-5), with a clamping system (9, 10) according to one of claims 1 to 8, a double clamping system (8) according to claim 9 or a tower clamping system (1) according to one of claims 10 or 11.

## Revendications

1. Système de serrage (9, 10) servant à serrer des pièces (2 - 5), en particulier pour un usinage par enlèvement de copeaux des pièces enserrées dans un centre d'usinage, avec
a) un guide de chariot (11),
b) un premier chariot (13, 14), qui
b1) est guidé par le guide de chariot (11),
b2) peut être coulissé le long du guide de chariot (11), et
b3) qui présente un premier logement de mâchoire de serrage, au niveau duquel une première mâchoire de serrage (17, 18) peut être installée,
c) un deuxième chariot (12, 15), qui
c1) est guidé par le guide de chariot (11),
c2) peut être coulissé le long du guide de chariot (11), et
c3) qui présente un deuxième logement de mâchoire de serrage, au niveau duquel une deuxième mâchoire de serrage (16, 19) peut être installée,
d) une broche de serrage (24, 25) montée de manière à pouvoir tourner, qui s'engage d'une part au niveau du premier chariot (13, 14) et d'autre part au niveau du deuxième chariot (12, 15) pour serrer les deux chariots (12, 13 ou 14, 15) conformément à la position de rotation des broches de serrage (24, 25) les unes par rapport aux autres, et
e) un troisième logement de mâchoire de serrage (20, 21), qui
e1) est monté de manière stationnaire au niveau du guide de chariot (11),
e2) dans lequel une mâchoire immobile (22, 23) peut être montée au niveau du troisième logement de mâchoire de serrage (20, 21),
f) dans lequel le système de serrage (9, 10) permet une fonction de « troisième main », et avec
g) un coulisseau (26, 27), dans lequel le coulisseau (26, 27)
g1) peut être coulissé le long du guide de chariot (11), et
g2) coopère avec le premier chariot (13, 14), **caractérisé en ce**
h) **que** le troisième logement de mâchoire de serrage (20, 21) est disposé entre le premier logement de mâchoire de serrage et le deuxième logement de mâchoire de serrage,
i) **qu'**une première pièce (3, 4) peut être serrée entre la première mâchoire de serrage (17, 18) et la mâchoire immobile (22, 23) centrale tandis qu'une deuxième pièce (2, 5) peut être serrée entre la deuxième mâchoire de serrage (16, 19) et la mâchoire immobile centrale,
j) **que** le coulisseau (26, 27) peut être coulissé au moyen d'une broche d'ajustement (28, 29) montée de manière à pouvoir tourner, et
k) **que** le coulisseau (26, 27) définit un espace de jeu de déplacement défini du premier chariot (13, 14) par rapport au coulisseau (26, 27) de sorte que le coulisseau (26, 27) forme au niveau des limites de l'espace de jeu de déplacement respectivement une butée pour le premier chariot (13, 14) pour permettre la fonction de « troisième main ».

2. Système de serrage (9, 10) selon la revendication 1, **caractérisé en ce**
a) **que** le système de serrage (9, 10) présente un ressort (38), en particulier un ressort pneumatique (38) pour maintenir de manière temporaire les pièces (2 - 5) avant l'opération de serrage à proprement parler,
b) **que** le ressort (38) prend appui d'une part au niveau du côté frontal du guide de chariot (11), et
c) **que** le ressort (38) agit d'autre part sur le deuxième chariot (12, 15) et pousse le deuxième chariot (12, 15) conjointement avec le premier chariot (13, 14) pour l'éloigner du côté frontal du guide de chariot (11).

3. Système de serrage (9, 10) selon la revendication 2, **caractérisé en ce**
a) **que** le deuxième chariot (12, 15) présente côté frontal un trou borgne (39), qui s'étend dans le sens longitudinal du guide de chariot (11),
b) **que** le guide de chariot (11) présente côté frontal une plaque frontale (40) montée de manière stationnaire, et
c) **que** le ressort (38) prend appui d'une part au niveau du fond du trou borgne (39) et d'autre part au niveau de la plaque frontale (40).

4. Système de serrage (9, 10) selon l'une quelconque des revendications précédentes, **caractérisé en ce que** le coulisseau (26, 27) coopère grâce aux caractéristiques de structure qui suivent avec le premier chariot (13, 14) et délimite ce faisant l'espace de jeu de déplacement du premier chariot (13, 14) par rapport au coulisseau (26, 27) dans les deux directions :
a) une rainure longitudinale (32, 33) dans le coulisseau (26, 27), et
b) une tige de butée (30, 31), qui est fixée au niveau du premier chariot (13, 14) et dépasse dans la rainure longitudinale du coulisseau (26, 27) de sorte que la longueur de la rainure longitudinale (32, 33) délimite l'espace de jeu de déplacement du premier chariot (13, 14) par rapport au coulisseau (26, 27).

5. Système de serrage (9, 10) selon la revendication 4, **caractérisé en ce**
a) **qu'**une tige indicatrice (34, 35) dépasse vers l'extérieur du coulisseau (26, 27),
b) **que** le guide de chariot (11) présente une entaille longitudinale (36, 37), et
c) **que** la tige indicatrice (34, 35) du coulisseau (26, 27) sort par l'entaille longitudinale (36, 37) du guide de chariot (11) en dépassant vers l'extérieur de sorte que la tige indicatrice (34, 35) et ainsi également la position du coulisseau (26, 27) sont visibles depuis l'extérieur.

6. Système de serrage (9, 10) selon l'une quelconque des revendications précédentes, **caractérisé en ce**
a) **que** le ressort (38) présente une course de serrage d'au moins 10 mm, 20 mm, 30 mm, 40 mm ou d'au moins 50 mm pour permettre de préférence également un enfoncement de boulons dans la pièce (2 - 5) à serrer ou une prise par le dessus de la pièce (2 - 5) à serrer, et/ou
b) **que** le serrage temporaire des pièces (2 - 5) fonctionne pour un poids de pièce d'au moins 1 kg, 2 kg, 5 kg, 10 kg, 20 kg ou 40 kg.

7. Système de serrage (9, 10) selon l'une quelconque des revendications précédentes, **caractérisé en ce que** le ressort (38) et le coulisseau (26, 27) sont montés de manière recouverte dans le guide de chariot (11) pour réduire la tendance à l'encrassement.

8. Double-système de serrage (8) avec deux systèmes de serrage (9, 10), qui sont disposés l'un derrière l'autre dans le sens longitudinal dans un guide de chariot (11) commun de sorte que quatre pièces (2 - 5) peuvent être serrées, **caractérisé en ce que** les deux systèmes de serrage (9, 10) sont réalisés respectivement selon l'une quelconque des revendications précédentes.

9. Double système de serrage (8) selon la revendication 8, **caractérisé en ce que** les broches de serrage (24, 25) et les broches d'ajustement (28, 29) des deux systèmes de serrage (9, 10) sont toutes accessibles au niveau d'un côté frontal du double système de serrage (8).

10. Système de serrage de tour (1) avec
a) une tour de montage (7) verticale,
b) au moins un système de serrage (9, 10) selon l'une quelconque des revendications précédentes, dans lequel le système de serrage (9, 10) est intégré de manière latérale dans la tour de montage (7) et s'étend par son sens longitudinal de manière verticale le long de la tour de montage (7).

11. Système de serrage de tour (1) selon la revendication 10, **caractérisé en ce que** plusieurs systèmes de serrage (9, 10) selon l'une quelconque des revendications 1 à 8 ou plusieurs doubles systèmes de serrage (8) selon la revendication 9 sont intégrés respectivement de manière latérale dans la tour de montage (7).

12. Centre d'usinage pour usiner par enlèvement de copeaux des pièces (2 - 5), avec un système de serrage (9, 10) selon l'une quelconque des revendications 1 - 8, un double système de serrage (8) selon la revendication 9 ou un système de serrage de tour (1) selon l'une quelconque des revendications 10 ou 11.
